# EUROPÄISCHE PATENTSCHRIFT

(11) **EP 2 350 151 B1**
(45) Veröffentlichungstag und Bekanntmachung des Hinweises auf die Patenterteilung: **27.02.2013**
(21) Anmeldenummer: 09736884.9
(22) Anmeldetag: 06.10.2009
(51) Int. Cl.: C08F 293/00, C08F 2/38, C08F 6/02, C08F 8/26, C08F 8/34, C09J 153/00, C09D 153/00, C08L 53/00

(54) **VERFAHREN ZUR HERSTELLUNG VON TELECHELEN MIT EINER BREITEN MOLEKULKARGEWICHTSVERTEILUNG**
METHOD FOR PRODUCING TELECHELICS HAVING A WIDE MOLECULAR WEIGHT DISTRIBUTION
PROCÉDÉ DE FABRICATION DE TÉLÉCHÉLIQUES AVEC UNE DISTRIBUTION LARGE DES MASSES MOLÉCULAIRES

(30) Priorität: 12.11.2008 DE 102008043662
(43) Veröffentlichungstag der Anmeldung: 03.08.2011
(73) Patentinhaber: Henkel AG & Co. KGaA, 40589 Düsseldorf (DE)
(72) Erfinder: BALK, Sven, 60594 Frankfurt (DE); KAUTZ, Holger, 45721 Haltern am See / Sythen (DE); LÖHDEN, Gerd, 45136 Essen (DE); ZANDER, Lars, 41569 Rommerskirchen (DE); LÜCKERT, Jens, 30890 Brasinghausen (DE); KLEIN, Johann, 40593 Düsseldorf (DE); MÖLLER, Thomas, 40593 Düsseldorf (DE); ERB, Volker, 40595 Düsseldorf (DE)
(86) Internationale Anmeldenummer: PCT/EP2009/062931
(87) Internationale Veröffentlichungsnummer: WO 2010/054896

(56) Entgegenhaltungen:
- EP-A2- 1 637 550
- WO-A1-99/20659
- WO-A1-2007/033887
- WO-A1-2008/012116
- PARIS R ET AL: "Synthesis of crosslinkable ABA triblock copolymers based on allyl methacrylate by atom transfer radical polymerization" EUROPEAN POLYMER JOURNAL, PERGAMON PRESS LTD. OXFORD, GB, Bd. 44, Nr. 5, 1. Mai 2008 (2008-05-01), Seiten 1403-1413, XP022623137 ISSN: 0014-3057 [gefunden am 2008-02-15]

## Beschreibung

Die Erfindung betrifft ein kontrolliertes Polymerisationsverfahren zur Herstellung von Telechelen auf (Meth)acrylatbasis, die eine breite, monomodale Molekulargewichtsverteilung aufweisen, sowie deren Verwendung als Bindemittel in Klebstoffen oder Dichtmassen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.

Polymere können beispielsweise über ionische Polymerisationsverfahren oder durch Polykondensation bzw. -addition hergestellt werden. In diesen Verfahren ist die Darstellung endgruppenfunktionalisierter Produkte unproblematisch. Dabei ist jedoch ein gezielter Molekulargewichtsaufbau problematisch.

Polymere, die durch einen freiradikalischen Polymerisationsprozess gewonnen werden, zeigen Molekularitätsindizes von deutlich über 1,8. Es liegen bei einer solchen Molekulargewichtsverteilung also zwangsläufig sehr kurzkettige sowie langekettige Polymere im Gesamtprodukt vor. Die kurzkettigen Polymerketten zeigen in Schmelze oder Lösung eine verringerte Viskosität und in einer Polymermatrix eine erhöhte Mobilität gegenüber langkettigen Bestandteilen. Dies führt zum einen zu einer verbesserten Verarbeitbarkeit solcher Polymere und zum anderen zu einer gesteigerten Verfügbarkeit von polymergebundenen funktionellen Gruppen in einer Polymermasse oder Beschichtung.

Langkettige Nebenprodukte führen dagegen zu einer überproportionalen Viskositätszunahme der Polymerschmelze bzw. -lösung. Auch ist die Migration solcher Polymere in einer Matrix deutlich vermindert.

Nachteil von freiradikalisch hergestellten Bindemitteln dieser Art ist jedoch eine statistische Verteilung von funktionellen Gruppen in der Polymerkette. Außerdem ist über eine freiradikalische Polymerisationsmethode weder eine hart-weich-hart Triblockarchitektur noch die gezielte Synthese einzelner Polymerblöcke mit engen Molekulargewichtsverteilungen möglich.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation.

Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ = 10.000-120.000 g/mol. Ein besonderer Vorteil dabei ist, dass das Molekulargewicht regelbar ist. Als lebende Polymerisation gestattet sie ferner den gezielten Aufbau von Polymerarchitekturen wie beispielsweise statistische Copolymere oder auch Block-Copolymer-Strukturen. Kontrolliert radikalische Methoden eignen sich insbesondere auch zur gezielten Funktionalisierung von Vinyl polymeren. Insbesondere von Interesse sind Funktionalisierungen an den Kettenenden (so genannte Telechele) bzw. in der Nähe der Kettenenden. Im Gegensatz dazu ist die gezielte Funktionalisierung am Kettenende bei der radikalischen Polymerisation nahezu unmöglich.

Bindemittel mit definiertem Polymerdesign können durch eine kontrollierte Polymerisationsmethode, z.B. in Form der atom transfer radical polymerisation, zur Verfügung gestellt werden. So sind ABA Triblockcopolymere beschrieben, die über einen unfunktionalisierten B-Block und funktionalisierte A-Außenblöcke verfügen. IN EP 1 475 397 sind solche Polymere mit OH-Gruppen, in WO 2007/033887 mit olefinischen, in WO 2008/012116 mit Amin- und in der noch nicht veröffentlichten DE 102008002016 mit Silylgruppen beschrieben. Alle in diesen Schriften beschriebenen Polymere weisen jedoch eine explizit enge Molekulargewichtsverteilung auf.

Über die so genannte kontrollierte Polymerisationsverfahren sind keine Verfahren beschrieben, mit denen es möglich wäre, Polymere herzustellen, die einzelne oder mehrere Blöcke mit gezielt breiter Molekulargewichtsverteilung aufweisen.

Eine bereits etablierte Methode ist die Endgruppenfunktionalisierung eines Poly(meth)acrylats mit olefinischen Gruppen und die anschließende Hydrosilylierung dieser Gruppen. Solche Verfahren finden sich unter anderem in EP 1 024 153, EP 1 085 027 und EP 1 153 942. Dabei handelt es sich jedoch nicht um Blockcopolymere und es wird explizit auf eine Molekulargewichtsverteilung des Produktes kleiner 1,6 hingewiesen. Ein weiterer Nachteil dieser Produkte gegenüber Polymeren mit mehrfach funktionalisierten Außenblöcken ist die höhere Wahrscheinlichkeit, einseitig nicht funktionalisierte Produkte zu erhalten. Durch den gegenüber den erfindungsgemäßen Polymeren jeweils resultierenden geringeren Funktionalisierungsgrad erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit entgegenwirkt.

Neben Telechelen und Blockstrukturen stellen auch ATRP-synthesisierte - z.B. silylhaltige - (Meth)acrylatcopolymere mit einer statistischen Verteilung und einer engen Molekulargewichtsverteilung eine Alternative dar. Nachteil solcher Bindemittel ist eine engmaschige Vernetzung. Auch haben solche Bindemittelsysteme aufgrund der engen Molekulargewichtsverteilung weder die Vorteile besonders langer, noch besonders kurzer in System enthaltener Polymerketten.

Neben der ATRP kommen zur Synthese funktionalisierter Polymerarchitekuren auch andere Methoden zum Einsatz. Eine weitere relevante Methode soll im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:

Bei der anionischen Polymerisation können Bimodalitäten auftreten. Diese Polymersiationsverfahren können aber nur bestimmte Funktionalisierungen erzeugen. Für die ATRP sind bimodale Verteilungen für Systeme beschrieben. Die Bimodalität dieser Polymere ergibt sich jedoch jeweils aus dem Vorliegen von Blockcopolymeren einerseits und nicht umgesetzten Makroinitiatoren andererseits. Nachteil dieser Verfahren ist es, dass das Produkt aus einer Mischung zweier unterschiedlicher Polymerzusammensetzungen besteht.

In EP 1 637 550 wird die Sysnthese von MMA-nBA-MMA-Triblockcopolymeren zur Verwendung in thermoplastischen Elastomeren dargelegt. Dem Fachmann ist bekannt, dass solche Materialien im besten Fall in allen Blöcken sehr enge Molekulargewichtsverteilungen aufweisen.

In Paris et al. (European Polymer Journal, 44, 5, S.1403-13, 2008) werden ABA-Triblockcopolymere mit A-Blöcken aus Allylmethacrylat vorgestellte. Hier weisen die B-Blöcke eine monomodale enge Molekulargewichtsverteilung auf, während die A-Blöcke bimodal, breit und verzweigt sind.

In WO 99/20659 werden einerseits Polymere mit einer Gesamtverteilung kleiner 2,5 und andererseits Triblockcopolymere aufgezeigt, ohne dass eine Lehre zur Synthese breit verteilter Triblockcopolymere bzw. solche Polymere an sich ausgeführt würde.

### Aufgabe

Eine neue Stufe der Entwicklung sind die im Folgenden beschriebenen Telechelen. Unter Telechelen versteht man Polymere, die genau an den beiden Kettenenden eine identische funktionelle Gruppe tragen. Im Sinne dieser Erfindung handelt es sich um ABA-Triblockcopolymere, die an den Kettenenden zu mindestens 75 %, bevorzugt zu mindestens 85 % diese funktionellen Gruppen aufweisen.

Aufgabe war es, ein Verfahren zur Synthese von Telechelen, die insgesamt einen Polydispersitätsindex von mindestens 1,8 aufweisen, zur Verfügung zu stellen.

In einem Aspekt dieser Erfindung war es Aufgabe, ein Verfahren zur Synthese von telechelen Triblockpolymeren der Struktur ABA aus Poly(meth)acrylaten zur Verfügung zu stellen. Dabei sollen diese aus A-Blöcken mit in sich enger Molekulargewichtsverteilung von weniger als 1,6 und B-Blöcken, die eine monomodale, breite Molekulargewichtsverteilung mit zum einen langen Polymerketten und zum anderen besonders kurzen Polymerketten aufweisen, zusammengesetzt sein. Insbesondere besteht der Bedarf an ABA-Triblockcopolymeren, deren B-Blöcke mit monomodaler, breiter Molekulargewichtsverteilung einen Polydispersitätsindex von mindestens 1,8 aufweisen und ABA-Triblockcopolymere diese B-Blöcke enthaltend, die insgesamt einen Polydispersitätsindex von mindestens 1,8 aufweisen.

Dabei sind ABA-Triblockcopolymere mit Pentablockcopolymeren der Zusammensetzung ACBCA bzw. CABAC gleichzusetzen.

Parallel war es eine Aufgabe dieser Erfindung, mit dem Verfahrensschritt der Funktionalisierung gleichzeitig ein großtechnisch realisierbares Verfahren zur Abtrennung von Übergangsmetallkomplexen aus Polymerlösungen zur Verfügung zu stellen. Zugleich soll das neue Verfahren kostengünstig und schnell durchführbar sein. Eine weitere Aufgabe war es, bereits nach einem Filtrationsschritt besonders niedrige Restkonzentrationen der Übergangsmetallkomplexverbindungen zu realisieren.

### Lösung

Die Aufgabe wurde gelöst durch das zur Verfügung Stellen eines neuen Polymerisationsverfahrens, das auf der atom transfer radical polymerization (ATRP) basiert. Gelöst wurde die Aufgabe insbesondere durch eine Initiierung über einen längeren Zeitraum, genauer durch eine Dosierung des Initiators und einen Abbruch der Polymerisation durch Zugabe geeigneter Schwefelverbindungen.

Es wird ein Verfahren zur Herstellung von (Meth)acrylatpolymeren bereitgestellt, dadurch gekennzeichnet, dass es sich um eine atom transfer radical polymerization (ATRP) handelt, bei der ein bifunktioneller Initiator zur Polymerisationslösung gegeben wird, und dass das (Meth)acrylatpolymer einen Polydispersitätsindex größer 1,8 aufweist. Dabei wird die Initiierung mit einer Teilmenge des Initiators gestartet, und danach eine zweite Menge des Initiators kontinuierlich zudosiert.

Zusätzlich wird ein Verfahren zur Verfügung gestellt, in dem durch Zugabe geeigneter funktioneller Schwefelverbindungen ein Abbruch der Polymerisation herbeigeführt wird. Durch Wahl geeigneter Schwefelverbindungen werden die jeweiligen Kettenenden dabei funktionalisiert. Gleichzeitig werden die endständigen Halogenatome von dem Polymer entfernt und das für die Polymerisation benötigte Übergangsmetall nahezu vollständig ausgefällt. Dieses kann anschließend mittels Filtration einfach abgetrennt werden.

In einer Variante der vorliegenden Erfindung wird ein Verfahren zur Synthese von telechelen ABA-Triblockcopolymeren mit einem Polydispersitätsindex größer 1,8 zur Verfügung gestellt, dadurch gekennzeichnet, dass es sich um eine sequentiell durchgeführte atom transfer radical polymerization (ATRP) handelt, bei der ein bifunktioneller Initiator zur Polymerisationslösung gegeben wird, und dass das Blockcopolymer insgesamt und auch der Blocktyp B einen Polydispersitätsindex größer 1,8 aufweist. Durch Wahl der Methode einer sequentiellen Polymerisation entspricht das Verfahren soweit der Herstellung von Polymeren ohne Blockstruktur. Durch Zugabe einer zweiten Monomermischung A und die eventuell darauf folgende, zeitversetzte Zugabe einer Monomermischung C werden ABA-Triblock- bzw. CABAC-Pentablockcopolymere aufgebaut. Sowohl die Initiierung, die Polymerisation des Mittelblockes B und der Abbruch der Polymerisation mittels Zugabe geeigneter Schwefelverbindungen finden analog zur Herstellung eines Polymers ohne Blockstruktur statt. Daher können beide Strukturen in Hinblick auf die folgende Beschreibung als identisch betrachtet werden. Die Initiierung wird mit einer Teilmenge des Initiators gestartet, und danach eine zweite Menge des Initiators kontinuierlich zudosiert.

Die Blockcopolymere werden mittels eines sequentiellen Polymerisationsverfahrens hergestellt. Das heißt, dass die Monomermischung zur Synthese der Blöcke beispielsweise A erst nach einer Polymerisationszeit t₂ zu dem System gegeben werden, wenn die Monomermischung zur Synthese des Blocks beispielsweise B zu mindestens 90%, bevorzugt zu mindestens 95% umgesetzt worden ist. Durch dieses Verfahren wird gewährleistet, dass die B Blöcke frei von Monomeren der Zusammensetzung A sind, und dass die A Blöcke weniger als 10%, bevorzugt weniger als 5% der Gesamtmenge der Monomere der Zusammensetzung B enthalten. Die Blockgrenzen befinden sich nach dieser Definition an der jeweiligen Stelle der Kette, an der sich die erste Wiederholungseinheit der zugegebenen Monomermischung - in diesem Beispiel der Mischung A - befindet. Ein nur 95%iger Umsatz hat den Vorteil, dass die verbleibenden Monomere, vor allem im Falle von Acrylaten, einen effizienteren Übergang zur Polymerisation einer zweiten Monomerzusammensetzung, vor allem von Methacrylaten, ermöglichen. Auf diese Weise wird die Ausbeute von Blockcopolymeren deutlich verbessert.

Im erfindungsgemäßen Verfahren wird der Initiator zur Polymerisation der Monomermischung bzw. für Blockcopolymere der Monomermischung B nur teilweise zur Initiierung vorgelegt und der Rest über einen längeren Zeitraum zur Polymerlösung zudosiert. Mit der ersten Charge wird die Polymerisation gestartet. Dabei macht die erste Initiatorcharge 10% bis 60%, bevorzugt 20% bis 40% der gesamten Initiatormenge aus. Mit der Dosierung der verbleibenden Initiatormenge wird sofort oder leicht zeitversetzt nach Auftreten einer Exotherme, spätestens jedoch nach 10 min begonnen. Es wird über einen Zeitraum t₁, der je nach angestrebtem Molekulargewicht variieren kann, zudosiert. Die Zeit t₁ kann zwischen 60 Minuten und 6 Stunden, bevorzugt zwischen 90 Minuten und 3 Stunden betragen. Nach beendeter Dosierung wird vor der Zugabe der zweiten Monomermischung A bzw. C für die Polymerisationszeit t₂ weiter polymerisiert. t₂ kann als Beispiel für ein angestrebtes Molekulargewicht von 10000 g/mol bis 40000 g/mol zwischen 5 min und 6 Stunden, bevorzugt zwischen 30 min und 3 Stunden betragen. Für höhere Molekulargewichte sind durchaus längere Polymerisationszeiten nötig.

Durch geeignete Wahl der Dosierzeit t₁ und der anschließenden Polymerisationszeit t₂ können das minimale Molekulargewicht und die Breite der Molekulargewichtsverteilung der B-Blöcke gezielt eingestellt werden. Durch den schnellen Beginn der Dosierung nach der Primärinitiierung ist ferner gewährleistet, dass man Polymerblöcke B mit einer monomodalen Molekulargewichtsverteilung erhält.

Auf diese Weise werden Makroinitiatoren der Zusammensetzung B für den sequentielllen Aufbau von Blockcopolymeren der Zusammensetzung ABA gebildet. Diese Makroinitiatoren weisen in sich eine Molekulargewichtsverteilung mit einem Polydispersitätsindex zwischen 1,8 und 3,0, bevorzugt zwischen 1,9 und 2,5 auf.

Nach der Polymerisationszeit t₂ wird schließlich die Monomermischung A zugegeben. Durch den Charakter der ATRP stehen zu diesem Zeitpunkt beide vorher Initiierten Polymerspezies der Zusammensetzung B zur Polymerisation zur Verfügung und die die Polymerblöcke A werden unter den bereits bekannten Voraussetzungen der ATRP aufgebaut. Diese Segmente der Polymerketten zeigen entsprechend in sich eine enge Molekulargewichtsverteilung. Dabei können im Fall von Pentablockpolymeren auch Blöcke vom Typ C oder D entsprechend aufgebaut werden.

Ein weiterer Vorteil der vorliegenden Erfindung ist die weiterhin verhinderte Rekombination. So kann auch mit diesem Verfahren die Bildung von besonders hohen Molekulargewichten unterdrückt werden. Solche Polymerbestandteile würden überproportional zu einer Steigerung der Lösungs- bzw. Schmelzviskosität beitragen. Vielmehr weist das erfindungsgemäß hergestellte breit verteilte, monomodale Polymer eine neuartige Polymerverteilung auf. Durch die Vorlage eines Teils des Initiators zur Primärinitiierung werden die Ketten gebildet, die der längsten Polymerisationszeit unterliegen und damit im Endprodukt das höchste Molekulargewicht aufweisen. Somit erhält man ein Polymer, dass zu hohen Molekulargewichten weiterhin die Charakteristika eines mittels kontrollierter Polymerisation hergestellten Polymers aufweist. Die Verteilung zeigt zu niedrigen Molekulargewichten jedoch ein starke Verbreiterung der Molekulargewichtsverteilung, die der eines Produktes, das mittels konventioneller freier radikalischer Polymerisation hergestellt wurde, ähnelt oder sogar breiter ist. Die gesamte Molekulargewichtsverteilung der erfindungsgemäß hergestellten Polymere hat einen Polydispersitätsindex größer 1,8.

Erfindungsgemäß wird als Maß für die Uneinheitlichkeit der Molekulargewichtsverteilung der Polydispersitätsindex als Quotient aus dem Gewichts- und dem Zahlenmittel der Molekulargewichte angegeben. Die Molekulargewichte werden mittels Gelpermeationschromatographie (GPC) gegen einen PMMA-Standard bestimmt.

Ein weiterer Bestandteil der vorliegenden Erfindung ist die gezielte Funktionalisierung der ABA, CABAC, ACBCA bzw. CDBDC_Blockcopolymere mit breiter, monomodaler Molekulargewichtsverteilung an den Kettenenden. Gelöst wurde die Aufgabe dadurch, dass nach erfolgter ATRP mittels Zugabe einer geeigneten Schwefelverbindung die Übergangsmetallverbindung gefällt wird und gleichzeitig die Kettenenden des Polymers funktionalisiert werden. Auf diese Weise werden die Kettenenden zu mindestens 75 %, bevorzugt zu mindestens 85 % funktionalisiert.

Bevorzugt handelt es sich bei den erfindungsgemäß nach oder während des Polymerisationsabbruchs der Polymerlösung zugegebenen Reagenzien um Verbindungen, die Schwefel in organisch gebundener Form enthalten. Insbesondere bevorzugt weisen diese zur Fällung von Übergangsmetallionen bzw. Übergangsmetallkomplexen eingesetzten schwefelhaltigen Verbindungen SH-Gruppen und gleichzeitig eine zweite funktionelle Gruppe auf. Insbesondere bevorzugt handelt es sich bei dieser zweiten funktionellen Gruppe um eine Hydroxy-, Säure- oder Silylgruppe. Bei den insbesondere bevorzugten Verbindungen handelt es sich um kommerziell leicht verfügbare, in der freiradikalischen Polymerisation als Regler eingesetzte Verbindungen. Vorteil dieser Verbindungen ist ihre leichte Verfügbarkeit, ihr niedriger Preis und die breite Variationsmöglichkeit, die eine optimale Anpassung der Fällungsreagenzien an das jeweilige Polymerisationssystem ermöglichen. Die vorliegende Erfindung lässt sich jedoch nicht auf diese Verbindungen einschränken.

Als organische Verbindungen seien ganz besonders bevorzugt funktionalisierte Mercaptane und / oder andere funktionalisierte oder auch unfunktionalisierte Verbindungen, die eine oder mehrere Thiolgruppen und eine oder merhrere weitere funktionelle Gruppen aufweisen und / oder unter den Lösungsbedingungen entsprechende Thiolgruppen und / oder eine oder merhrere weitere funktionelle Gruppen bilden können, aufgeführt.

Bei den hydroxyfunktionellen Schwefelverbindungen kann es sich beispielsweise um organische Verbindungen wie Mercaptoethanol, Mercaptopropanol, Mercaptobutanol, Mercaptopentanol oder Mercaptohexanol handeln.

Bei den säurefunktionellen Schwefelverbindungen kann es sich beispielsweise um organische Verbindungen wie Thioglykolessigsäure oder Mercaptopropionsäure handeln.

Bei den silylfunktionellen Schwefelverbindungen kann es sich beispielsweise um kommerziell leicht verfügbare Verbindungen, die z.B. als Haftvermittler große industrielle Bedeutung haben. Vorteil auch dieser Verbindungen ist ihre leichte Verfügbarkeit und ihr niedriger Preis. Ein Beispiel einer solchen Verbindung stellt 3-Mercaptopropyltrimethoxysilan, das von Evonik Industries unter dem Namen DYNALYSAN^{®}-MTMO vertrieben wird, dar. Weitere verfügbare Silane sind 3-Mercaptopropyltriethoxysilan oder 3-Mercaptopropylmethyldimethoxysilan (Fa. ABCR). Besonders reaktiv sind die so genannten α-Silane. In diesen Verbindungen sind die Mercaptogruppe und die Silangruppe an das gleiche Kohlenstoffatom gebunden (R¹ ist also in der Regel -CH₂-). Entsprechende Silangruppen solcher Art sind besonders reaktiv und können somit in der späteren Formulierung zu einem breiteren Anwendungsspektrum führen. Beispiel für eine solche Verbindung wäre Mercaptomethylmethyldiethoxysilan (Fa. ABCR).

In der freiradikalischen Polymerisation wird die Menge an Reglern, bezogen auf die zu polymerisierenden Monomeren, zumeist mit 0,05 Gew-% bis 5 Gew-%, angegeben. In der vorliegenden Erfindung wird die Menge der eingesetzten Schwefelverbindung nicht auf die Monomere, sondern auf die Konzentration der polymerisationsaktiven Kettenenden in der Polymerlösung bezogen. Mit polymerisationsaktiven Kettenenden ist die Summe aus schlafenden und aktiven Kettenenden gemeint. Die erfindungsgemäßen schwefelhaltigen Fällungsmittel werden in diesem Sinne in 1,5 molaren Äquivalenten, bevorzugt 1,2 molaren Äquivalenten, besonders bevorzugt unter 1,1 molaren Äquivalenten und ganz besonders bevorzugt unter 1,05 molaren Äquivalenten eingesetzt. Die verbleibenden Restschwefelmengen lassen sich durch Modifikation des folgenden Filtrationsschrittes leicht entfernen.

Es ist dem Fachmann leicht ersichtlich, dass die beschriebenen Mercaptane bei einer Zugabe zur Polymerlösung während oder nach Abbruch der Polymerisation mit Ausnahme der beschriebenen Substitutionsreaktion keinen weiteren Einfluss auf die Polymere haben können. Dies gilt insbesondere für die Breite der Molekulargewichtsverteilungen, das Molekulargewicht, zusätzliche Funktionalitäten, Glastemperatur, bzw. Schmelztemperatur bei teilkristallinen Polymeren und Polymerarchitekturen.

Die erfindungsgemäßen telechelen Polymere bzw. Blockcopolymere können zusätzliche funktionelle Gruppen, die den Endgruppen entsprechen oder von diesen verschieden sein können, enthalten. In Blockcopolymeren können diese zusätzlichen funktionellen Gruppen gezielt in einem oder mehreren Blöcken eingebaut werden. Die folgende Auflistung dient nur als Beispiel zur Verdeutlichung der Erfindung und dient nicht dazu, die Erfindung in irgendeiner Weise einzuschränken.

So können die telechelen Polymere beispielsweise zusätzliche OH-Gruppen aufweisen. Hydroxyfunktionalisierte (Meth)acrylate, die dazu geeignet sind, sind bevorzugt Hydroxyalkyl(meth)acrylate von gradkettigen, verzweigten oder cycloaliphatischen Diolen mit 2-36 C-Atomen, wie beispielsweise 3-Hydroxypropyl(meth)acrylat, 3,4-Dihydroxybutylmono(meth)acrylat, 2-Hydroxyethyl(meth)acrylat, 4-Hydroxybutyl(meth)acrylat, 2-Hydroxypropyl(meth)acrylat, 2,5-Dimethyl-1,6-hexandiolmono(meth)acrylat, besonders bevorzugt 2-Hydroxyethylmethacrylat.

Amingruppen sind beispielsweise durch die Copolymerisation von 2-Dimethylaminoethyl-methacrylat (DMAEMA), 2-Diethylaminoethyl-methacrylat (DEAEMA), 2-tert-butylaminoethyl-methacrylat (t-BAEMA), 2-Dimethylaminoethylacrylat (DMAEA), 2-Diethylaminoethyl-acrylat (DEAEA), 2-tert-butylaminoethyl-acrylat (t-BAEA), 3-Dimethylaminopropyl-methacrylamid (DMAPMA) und 3-Dimethylaminopropyl-acrylamid (DMAPA) darstellbar.

Polymere mit Allylgruppen können zum Beispiel durch die Copolymerisation von Allyl(meth)acrylat realisiert werden. Polymere mit Epoxygruppen durch die Copolymerisation von Glycidyl(meth)acrylat. Säuregruppen können durch die Copolymerisation von tert-Butyl(meth)acrylat und anschließende Verseifung bzw. thermische Abspaltung von Isobuten realisiert werden.

Beispiele für (Meth)Acrylat gebundene Silylreste seien -SiCl₃, -SiMeCl₂, -SiMe₂Cl, - Si(OMe)₃, -SiMe(OMe)₂, -SiMe₂(OMe), -Si(OPh)₃, -SiMe(OPh)₂, -SiMe₂(OPh), -Si(OEt)₃, -SiMe(OEt)₂, -SiMe₂(OEt), -Si(OPr)₃, -SiMe(OPr)₂, -SiMe₂(OPr), -SiEt(OMe)₂, - SiEtMe(OMe), -SiEt₂(OMe), -SiPh(OMe)₂, -SiPhMe(OMe), -SiPh₂(OMe), - SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen. Ein kommerziell verfügbares Monomer ist zum Beispiel Dynasylan^{®} MEMO der Firma Evonik-Degussa GmbH. Dabei handelt es sich um 3-Methacryloxypropyltrimethoxysilan.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden. Monomere die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan; Biodiesel; aber auch Weichmacher wie niedrigmolekulare Polypropylenglycole oder Phthalate.

Die Blockcopolymere der Zusammensetzung ABA werden mittels sequentieller Polymerisation dargestellt.

Neben der Lösungspolymerisation kann die ATRP auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weist das erfindungsgemäße Polymer ein zahlenmittleres Molekulargewicht zwischen 5000 g/mol und 100000 g/mol, besonders bevorzugt zwischen 7500 g/mol und 50000 g/mol und ganz besonders bevorzugt ≤ 30000 g/mol auf.

Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R. RC(O)-CHX-(CH₂)ₙ-CHX-C(O)R, RC(O)-C(CH₃)X-(CH₂)ₙ-C(CH)₃)X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, CuI, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll. Nach erfolgter ATRP wird die Übergangsmetallverbindung mittels Zugabe der beschriebenen Schwefelverbindung gefällt. Mittels Zugabe z.B. von Mercaptanen wird das kettenendständige Halogenatom unter Freisetzung eines Halogenwasserstoffs substituiert. Der Halogenwasserstoff - wie z.B. HBr - protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler.

Es ergibt sich ein breites Anwendungsfeld für diese Produkte. Die Auswahl der Anwendungsbeispiele ist nicht dazu geeignet, die Verwendung der erfindungsgemäßen Polymere einzuschränken. Bevorzugt können Telechele mit reaktiven Gruppen als Präpolymere für eine feuchtigkeitshärtende Vernetzung eingesetzt werden. Diese Präpolymere können mit beliebigen Polymeren vernetzt werden.

Die bevorzugten Anwendungen für die erfindungsgemäßen Telechele mit z.B. Silylgruppen sind in Dichtmassen, Reaktivschmelzklebstoffen oder in Klebmassen zu finden. Insbesondere bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Weitere bevorzugte Anwendungsgebiete sind Dichtmassen für Bauanwendungen, Heißsiegelanwendungen oder Montagekleber.

Die möglichen Anwendungen für erfindungsgemäß hergestellte Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung beschrieben, die unter anderem aus Acrylatpartikeln und Polyurethanen besteht. Ein erfindungsgemäßes Polymer führte in einer entsprechenden Formulierung zu einer Verbesserung der Verarbeitungs- und Vernetzungseigenschaften. Denkbare Anwendungen sind zum Beispiel Pulverlackformulierungen.

Mit den neuen Bindemitteln lassen sich vemetzbare einkomponentige und zweikomponentige Elastomere zum Beispiel für eine der aufgeführten Anwendungen herstellen. Übliche weitere Bestandteile einer Formulierung sind Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw.

Zur Reduktion der Viskosität können Lösungsmittel eingesetzt werden, z. B. aromatische Kohlenwasserstoffe wie Toluol, Xylol, usw., Ester, wie Ethylacetat, Butylacetat, Amylacetat, Cellosolveacetat, usw., Ketone, wie z. B. Methylethylketon, Methylisobutylketon, Diisobutylketon, usw. Das Lösungsmittel kann bereits im Verlauf der radikalischen Polymerisation zugegeben werden.

Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z.B. DYNASIL A und 40), als Vernetzungskatalysatoren verwendet werden. Daneben auch Titanate (z.B. Tetrabutyltitanat, Tetrapropyltitanat, usw.), Zirkonate (z.B. Tetrabutylzirkonat, usw.), Amine (z.B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen.

Ein Vorteil der Blockcopolymere ist die Farblosigkeit sowie die Geruchlosigkeit des hergestellten Produkts.

Ein weiterer Vorteil der vorliegenden Erfindung ist eine beschränkte Zahl von Funktionalitäten. Ein höherer Anteil funktioneller Gruppen im Bindemittel führt zu einer eventuellen vorzeitigen Vergelung oder zumindest zu einer zusätzlichen Erhöhung der Lösungs- bzw. Schmelzviskosität.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die zahlenmittleren bzw. gewichtsmittleren Molekulargewichte Mn bzw. Mw und der Polydispersitätsindex D = Mw/Mn als Maß für die Molekulargewichtsverteilungen werden durch Gelpermeations-Chromatographie (GPC) in Tetrahydrofuran gegenüber einem PMMA-Standard bestimmt.

Die folgenden Beispiele beschränken sich auf die Synthese von ABA-Triblockcopolymeren. Dem Fachmann ist leicht ersichtlich, dass diese Ergebnisse einfach auf Polymere ohne Blockstruktur bzw. auf Pentablockcopolymere zu übertragen sind.

### Vergleichsbeispiel 1

In einem mit Rührer, Thermometer, Rückflusskühler, Stickstoffeinleitungsrohr und Tropftrichter ausgestatteten Doppelmantelgefäß wurden unter N₂-Atmosphäre n-Butylacrylat (genaue Mengenangabe in Tabelle 1), 180 mL Ethylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 70 °C gerührt. Anschließend wird bei gleicher Temperatur eine Menge Initiator1 (siehe Tabelle 1) 1,4-Butandiol-di-(2-bromo-2-methylpropionat) (BDBIB, gesamter Initiator in 26 mL Ethylacetat gelöst) zugegeben. Nach der Polymerisationszeit von drei Stunden wird eine Probe zur Bestimmung des mittleren Molgewichts Mₙ (mittels SEC) entnommen und eine Mischung aus 100 mL Ethylacetat und Methylmethacrylat (genaue Mengenangabe in Tabelle 2) zugegeben. Die Mischung wird bis zu einem erwarteten Umsatz von mindestens 95% polymerisiert und durch Zugabe von 2,0 g Mercaptoethanol abgebrochen und weitere 50 min. bei 75 °C gerührt. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Vergleichsbeispiel 2

Die Polymerisation erfolgt analog zum Vergleichsbeispiel 1 unter Zugabe der in Tabelle 1 angegebenen Mengen. Abbruch der Reaktion erfolgt unter Zugabe von 2,0 g Thioglycolsäure.

### Vergleichsbeispiel 3

Die Polymerisation erfolgt analog zum Vergleichsbeispiel 1 unter Zugabe der in Tabelle 1 angegebenen Mengen. Abbruch der Reaktion erfolgt unter Zugabe von 5,0 g Dynasylan MTMO.

**Tabelle 1**

| | Vergleichsbsp.1 | Vergleichsbsp. 2 | Vergleichsbsp. 3 |
|---|---|---|---|
| n-BA | 134,7 g | 135,7 g | 134,5 g |
| Kupfer(I)oxid | 1,3 g | 1,4 g | 1,3 g |
| PMDETA | 3,5 g | 3,6 g | 3,8 g |
| Initiator1 | 2,6 g | 2,6 g | 2,7 g |
| MMA | 68,2 g | 67,6 g | 67,7 g |
| Mₙ(1.Sufe) | 19000 | 18600 | 20700 |
| D | 1,40 | 1,25 | 1,24 |
| Mₙ (Endprodukt) | 28600 | 30400 | 32700 |
| D | 1,36 | 1,31 | 1,33 |

| | | | |
|---|---|---|---|
| MMA = Methylmethacrylat; n-BA = n-Butylacrylat | | | |

Die Vergleichspiele 1 bis 3 zeigen, dass bei konventioneller Initiatorzugabe in einer Charge Polymere mit relativ eng verteilten Innenblöcken und Polydispersitätsindizes kleiner 1,4 gebildet werden.

Nach Entfernung des Lösungsmittels können die silyl-funktionalisierten Produkte durch Zugabe geeigneter Trocknungsmittel stabilisiert werden. Auf diese Weise lässt sich eine gute Lagerstabilität ohne weitere Molekulargewichtszunahme gewährleisten.

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre n-Butylacrylat (genaue Mengenangabe in Tabelle 1), 180 mL Ethylacetat, Kupfer(I)oxid (Menge siehe Tabelle 1) und N,N,N',N",N"-Pentamethyldiethylentriamin (PMDETA, Menge siehe Tabelle 1) vorgelegt. Die Lösung wird für 15 min. bei 70 °C gerührt. Anschließend wird bei gleicher Temperatur eine Menge Initiator1 (siehe Tabelle 1) 1,4-Butandiol-di-(2-bromo-2-methylpropionat) (BDBIB, gesamter Initiator in 26 mL Propylacetat gelöst) zugegeben. Nach 2 min wird mit der gleichmäßigen Zudosierung der Menge Initiator2 (siehe Tabelle 1; gelöst in 20 mL Ethylacetat) 1,4-Butandiol-di-(2-bromo-2-methylpropionat) (BDBIB) begonnen. Die Dosierung verläuft ohne Unterbrechung und mit konstanter Dosierrate über den Zeitraum t₁. Nach vollständiger Initiatorzugabe wird die Polymerisationslösung für einen Zeitraum t₂ bei der Polymerisationstemperatur gerührt, bevor eine Probe zur Bestimmung des mittleren Molgewichts Mₙ (mittels SEC) entnommen und Methylmethacrylat (genaue Mengenangabe in Tabelle 1) zugegeben wird. Die Mischung wird weitere zwei Stunden bei 75 °C gerührt und anschließend durch Zugabe von 2,0 g Mercaptoethanol abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Beispiel 2

Die Polymerisation erfolgt analog zu Beispiel 1 unter Zugabe der in Tabelle 2 angegebenen Mengen unter Einhaltung der ebendort angegebenen Zeiten. Abbruch der Reaktion erfolgt unter Zugabe von 2,3 g Thioglycolsäure.

### Beispiel 3

Die Polymerisation erfolgt analog zu Beispiel 1 unter Zugabe der in Tabelle 2 angegebenen Mengen unter Einhaltung der ebendort angegebenen Zeiten. Abbruch der Reaktion erfolgt unter Zugabe von 4,9 g Dynasylan MTMO.

**Tabelle 2**

| | Beispiel 1 | Beispiel 2 | Beispiel 3 |
|---|---|---|---|
| n-BA | 136,5 g | 134,4 g | 134,4 g |
| Kupfer(I)oxid | 1,3 g | 1,3 g | 1,3 g |
| PMDETA | 3,3 g | 3,4 g | 3,4 g |
| Initiator1 | 0,27 g | 0,26 g | 0,26 g |
| Initiator2 | 2,45 g | 2,35 g | 2,35 g |
| t₁ | 180 min | 180 min | 180 min |
| t₂ | 60 min | 30 min | 30 min |
| MMA | 67,7 g | 67,2 g | 67,2 g |
| Mₙ (1.Sufe) | 18700 | 20500 | 20000 |
| D | 1,91 | 1,94 | 1,86 |
| Mₙ (Endprodukt) | 24100 | 25100 | 24300 |
| D | 1,87 | 1,82 | 1,98 |

Die Molekulargewichtsverteilungen der ersten Polymerisationsstufen sind jeweils monomodal und weisen einen Molekularitätsindex D größer 1,8 auf. Die Endprodukte haben entsprechend große, wenn auch im Vergleich zu den reinen B-Blöcken kleinere Molekularitätsindizes. Dieser Effekt ergibt sich aus dem insgesamt höheren Molekulargewicht, zeigt jedoch auch, dass die Polymerisation der A-Blöcke kontrolliert abläuft und die Blöcke für sich eine enge Molekulargewichtsverteilung haben. Im Falle des Endcappings mit Dynsylan MTMO ist die Zunahme des Molekularitätsindex auf eine partielle Dimerisierung der Polymerketten an den Endgruppen zurückzuführen. Durch eine geeignete Versuchsdurchführung lässt sich dieser Effekt, der nicht in Zusammenhang mit dem Polymerisationsverfahren steht leicht unterdrücken.

Die Übertragung der Ergebnisse auf Pentablockcopolymere der Zusammensetzung ACBCA bzw. CABAC kann analog erfolgen. Die Synthese solcher Copolymere mit enger Verteilung sind beispielsweise in der noch nicht offengelegten Patentanmeldung DE 102008002016 der gleichen Anmelder beschrieben.

Auch eine Übertragung des Verfahrens auf Polymere ohne Blockstruktur kann problemlos erfolgen. In diesem Fall erfolgt die Mercaptanzugabe direkt nach Beendigung der Polymerisationszeit t₂ anstelle der Zugabe der Monomermischung A.

## Patentansprüche

1. Verfahren zur Herstellung von Polymeren durch eine sequentiell durchgeführte atom transfer radical polymerization (ATRP),
**dadurch gekennzeichnet,**
**dass** ein bifunktioneller Initiator zum Starten der Reaktion zur Polymerisationslösung in einer ersten Portion zugesetzt wird und danach ein zweiter Anteil kontinuierlich zugegeben wird, dass die Polymerkettenenden mittels Zusatz einer geeigneten Schwefelverbindung, die eine zweite funktionelle Gruppe aufweist, funktionalisiert werden und dass das Blockcopolymer der Zusammensetzung ABA insgesamt eine Molekulargewichtsverteilung mit einem Polydispersitätsindex größer 1,8 aufweist.

2. Verfahren zur Herstellung von Polymeren gemäß Anspruch 1, **dadurch gekennzeichnet, dass** der Initiator in zwei Chargen zugegeben wird, wobei die erste Initiatorcharge 10% bis 60 Gew.-%, bevorzugt 20% bis 40 Gew.-%, der gesamten Initiatormenge ausmacht und am Anfang der Polymerisation batchweise zugegeben wird, und dass die zweite Initiatorcharge direkt nach Zugabe der ersten Initiatorcharge dem System mit einer konstanten Dosierrate zudosiert wird.

3. Verfahren zur Herstellung von Polymeren gemäß einem der Ansprüche 1 oder 2, **dadurch gekennzeichnet, dass** die Schwefelverbindung als zweite funktionelle Gruppe eine Säure-, Hydroxy-, Silyl-, Allyl- oder Amingruppe aufweist.

4. Verfahren zur Herstellung von Polymeren gemäß Anspruch 3, **dadurch gekennzeichnet, dass** durch Zugabe der Schwefelverbindung gleichzeitig Halogenatome an den Polymerkettenenden entfernt werden und der ATRP-Katalysator gefällt wird.

5. Verfahren zur Herstellung von Polymeren gemäß Anspruch 3, **dadurch gekennzeichnet, dass** die Kettenenden durch Zugabe der Schwefelverbindung zu mindestens 75 %, bevorzugt zu mindestens 85 % funktionalisiert werden.

6. Verfahren zur Herstellung von Polymeren gemäß Anspruch 1, **dadurch gekennzeichnet, dass** das es sich bei dem Polymer um ein Polyacrylat, ein Polymethacrylat oder um ein Mischpolymerisat aus Acrylaten und Methacrylaten handelt.

7. Verfahren zur Herstellung von Polymeren gemäß Anspruch 6, **dadurch gekennzeichnet, dass** das Polymer oder einer oder mehrere der Polymerblöcke zusätzlich Acrylate und / oder Methacrylate, die eine zusätzliche funktionelle Gruppe aufweisen, enthält.

8. Verfahren zur Herstellung von Polymeren gemäß Anspruch 6, **dadurch gekennzeichnet, dass** das Polymer oder einer oder mehrere der Polymerblöcke zusätzlich Vinylester, Vinylether, Fumarate, Maleate, Styrole, Acrylonitrile oder andere mittels ATRP polymerisierbare Monomere enthält.

9. Verfahren zur Herstellung von Polymeren gemäß Anspruch 1, **dadurch gekennzeichnet, dass** das Polymer ein zahlenmittleres Molekulargewicht zwischen 5000 g/mol und 100000 g/mol, bevorzugt zwischen 7500 g/mol und 50000 g/mol aufweist.

10. Verfahren zur Herstellung von Polymeren gemäß einem der Ansprüche 1 bis 9, **dadurch gekennzeichnet, dass** es sich bei dem Polymer um ein Blockcopolymer, bevorzugt um ein Blockcopolymer der Zusammensetzung ABA, ACBCA oder CABAC handelt.

11. Verfahren zur Herstellung von Blockcopolymeren der Zusammensetzung ABA gemäß Anspruch 10, **dadurch gekennzeichnet, dass** es sich bei Block A, um ein Copolymer mit einer monomodalen Molekulargewichtsverteilung handelt, dass es sich bei Block B, um ein Copolymer mit einer monomodalen Molkulargewichtsverteilung mit einem Polydispersitätsindex größer 1,8 handelt, wobei die Monomere (Meth)acrylaten oder deren Mischungen sein können.

12. Verfahren zur Herstellung von Blockcopolymeren der Zusammensetzung ACBCA oder CABAC gemäß Anspruch 10, **dadurch gekennzeichnet,**
**dass** es sich bei den Blöcken A und C jeweils um einen Copolymerblock mit einer monomodalen Molekulargewichtsverteilung, wobei die Monomere aus (Meth)acrylaten oder deren Mischungen sein können und in Block C keine Monomere mit weiteren funktionellen Gruppen eingesetzt werden.

13. Verfahren zur Herstellung von Polymeren gemäß einem der Ansprüche 10 bis 11, **dadurch gekennzeichnet, dass** der Initiator in zwei Chargen zugegeben wird, wobei die erste Initiatorcharge 10% bis 60 Gew.-%, bevorzugt 20% bis 40 Gew.-%, der gesamten Initiatormenge ausmacht und am Anfang der Polymerisation batchweise zugegeben wird, und dass die zweite Initiatorcharge direkt nach Zugabe der ersten Initiatorcharge dem System mit einer konstanten Dosierrate zudosiert wird.

14. Verfahren zur Herstellung von Blockcopolymeren gemäß Anspruch 13, **dadurch gekennzeichnet, dass** die zweite Initiatorcharge über einen Zeitraum von mindestens 30 min, bevorzugt mindestens 60 min, zudosiert wird und die Dosierung mindestens 60 min, bevorzugt mindestens 90 min vor der Zugabe der Monomermischung A bzw. C zur Polymerisationslösung beendet wird.

15. ABA-Triblockcopolymer **dadurch gekennzeichnet, dass** die Kettenenden zu mindestens 75 %, bevorzugt zu mindestens 85 % eine funktionelle Gruppe aufweisen, die kein Halogenatom ist, und dass der Polydispersitätsindex des ABA-Triblockcopolymers größer 1,8, jedoch kleiner als der Polydispersitätsindex des Blockes B ist, enthaltend Block A mit einer monomodalen Molkulargewichtsverteilung, sowie Block B mit einer breiten, monomodalen Molekulargewichtsverteilung mit einem Polydispersitätsindex größer 1,8, wobei die Monomere ausgewählt werden aus (Meth)acrylaten oder deren Mischungen, erhältlich durch ein Verfahren nach Anspruch 11.

16. Pentablockcopolymer der Zusammensetzung ACBCA oder CABAC, **dadurch gekennzeichnet, dass** die Kettenenden zu mindestens 75 %, bevorzugt zu mindestens 85 % eine funktionelle Gruppe aufweisen, die kein Halogenatom ist, und dass der Polydispersitätsindex des Pentablockcopolymers größer 1,8, jedoch kleiner als der Polydispersitätsindex des Blockes B ist, enthaltend Blöcke A und C, bei denen es sich um Copolymere mit einer monomodalen Molekulargewichtsverteilung handelt, sowie Block B mit einer breiten, monomodalen Molekulargewichtsverteilung mit einem Polydispersitätsindex größer 1,8, wobei die Monomere ausgewählt werden aus (Meth)acrylaten oder deren Mischungen, erhältlich durch ein Verfahren nach Anspruch 12.

17. Verwendung eines Polymeren gemäß den Ansprüchen 15 oder 16 zur Herstellung von Schmelzklebstoffen, fließfähigen Klebstoffen, Haftklebstoffen, elastischen Dichtungsmassen, Beschichtungsmitteln oder von Schaumstoffvorläufern.

18. Verwendung von Polymeren gemäß den Ansprüchen 15 oder 16 zur Herstellung von Heißsiegelmassen.

19. Verwendung von Polymeren gemäß den Ansprüchen 15 oder 16 in vernetzbaren Zusammensetzungen, wobei das Blockcopolymer reaktive funktionelle Gruppen aufweist.

## Claims

1. A method for manufacturing polymers by a sequentially performed atom transfer radical polymerization (ATRP),
**characterized in that**
a bifunctional initiator is added in a first portion to the polymerization solution for initiating the reaction and then a second portion is added continuously; the polymer chain ends are functionalized by adding a suitable sulfur compound having a second functional group, and the block copolymer of the composition ABA has a whole molecular weight distribution with a polydispersity index greater than 1.8.

2. The method for manufacturing of polymers according to Claim 1, **characterized in that** the initiator is added in two batches, the first initiator batch constituting 10% to 60 wt%, preferably 20% to 40 wt% of the total quantity of initiator and being added by batches at the start of polymerization, and the second initiator batch being dosed at a constant dosing rate to the system immediately after adding the first initiator batch.

3. The method for manufacturing of polymers according to any one of Claims 1 or 2, **characterized in that** the sulfur compound has an acid group, a hydroxyl group, a silyl group, an allyl group or an amine group as the second functional group.

4. The method for manufacturing of polymers according to Claim 3, **characterized in that** by adding the sulfur compound both halogen atoms on the polymer chain ends are removed and the ATRP catalyst is precipitated.

5. The method for manufacturing of polymers according to Claim 3, **characterized in that** the chain ends are at least 75% functionalized, preferably at least 85% functionalized by adding the sulfur compound.

6. The method for manufacturing of polymers according to Claim 1, **characterized in that** the polymer is a polyacrylate, a polymethacrylate or a heteropolymer of acrylates and methacrylates.

7. The method for manufacturing of polymers according to Claim 6, **characterized in that** the polymer or one or more of the polymer blocks additionally contain acrylates and/or methacrylates having an additional functional group.

8. The method for manufacturing of polymers according to Claim 6, **characterized in that** the polymer or one or more of the polymer blocks additionally contain vinyl esters, vinyl ethers, fumarates, maleates, styrenes, acrylonitriles or other monomers polymerizable by ATRP.

9. The method for manufacturing of polymers according to Claim 1, **characterized in that** the polymer has a number-average molecular weight between 5000 g/mol and 100,000 g/mol, preferably between 7500 g/mol and 50,000 g/mol.

10. The method for manufacturing of polymers according to any one of Claims 1 to 9, **characterized in that** the polymer is a block copolymer, preferably a block copolymer of the composition ABA, ACBCA or CABAC.

11. The method for manufacturing of block copolymers of the composition ABA according to Claim 10, **characterized in that** block A is a copolymer with a monomodal molecular weight distribution; block B is a copolymer with a monomodal molecular weight distribution with a polydispersity index greater than 1.8, in which the monomers may be (meth)acrylates or mixtures thereof.

12. The method for manufacturing of block copolymers of the composition ACBCA or CABAC according to Claim 10, **characterized in that** blocks A and C are each a copolymer block with a monomodal molecular weight distribution, in which the monomers may be (meth)acrylates or mixtures thereof and no monomers with additional functional groups are used in block C.

13. The method for manufacturing of polymers according to any one of Claims 10 to 11, **characterized in that** the initiator is added in two batches, the first initiator batch constituting 10% to 60 wt% preferably 20% to 40 wt% of the total quantity of initiator and being added by batches at the start of polymerization, and the second initiator batch being dosed at a constant dosing rate to the system immediately after addition of the first initiator batch.

14. The method for manufacturing of block copolymers according to Claim 13, **characterized in that** the second initiator batch is dosed over a period of at least 30 minutes, preferably at least 60 minutes, and the dosing is terminated at least 60 minutes, preferably at least 90 minutes before the addition of monomer mixture A resp. C to the polymerization solution.

15. An ABA triblock copolymer, **characterized in that** at least 75%, preferably at least 85% of the chain ends have a functional group that is not a halogen atom, and the polydispersity index of the ABA triblock copolymer is greater than 1.8, however smaller than the polydispersity index of block B, containing block A with a monomodal molecular weight distribution, as well as block B with a broad monomodal molecular weight distribution with a polydispersity index greater than 1.8, the monomers being selected from (meth)acrylates or mixtures thereof, obtainable by a method according to Claim 11.

16. A pentablock copolymer of the composition ACBCA or CABAC, **characterized in that** at least 75%, preferably at least 85% of the chain ends have a functional group that is not a halogen atom, and the polydispersity index of the pentablock copolymer is greater than 1.8, however smaller than the polydispersity index of block B, containing blocks A and C, which are copolymers having a monomodal molecular weight distribution, as well as block B with a broad monomodal molecular weight distribution with a polydispersity index greater than 1.8, the monomers being selected from (meth)acrylates or mixtures thereof obtainable by a method according to Claim 12.

17. Use of a polymer according to Claims 15 or 16 for manufacturing of hotmelt adhesives, free-flowing adhesives, pressure-sensitive adhesives, elastic sealing compounds, coating agents or foam precursors.

18. Use of polymers according to Claims 15 or 16 for manufacturing of heat-sealing compounds.

19. Use of polymers according to Claims 15 or 16 in crosslinkable compositions, in which the block copolymer contains reactive functional groups.

## Revendications

1. Procédé pour la préparation de polymères via une polymérisation radicalaire par transfert d'atomes (ATRP) mise en oeuvre de manière séquentielle
**caractérisé**
**en ce qu'**on ajoute à la solution de polymérisation, en une première portion, un initiateur difonctionnel pour le déclenchement de la réaction et on ajoute ensuite une deuxième fraction en continu, en ce que l'on fonctionnalise les extrémités de la chaîne polymère par addition d'un composé de soufre approprié qui présente un deuxième groupe fonctionnel et en ce que le copolymère séquencé de composition ABA présente au total une distribution du poids moléculaire dont l'indice de polydispersité est supérieur à 1,8.

2. Procédé pour la préparation de polymères selon la revendication 1, **caractérisé en ce qu'**on ajoute l'initiateur en deux lots, le premier lot d'initiateur représentant de 10 % à 60 % en poids, de préférence de 20 % à 40 % en poids de la quantité d'initiateur totale et étant ajouté en discontinu au début de la polymérisation, et **en ce qu'**on ajoute de manière dosée le deuxième lot d'initiateur au système directement après l'addition du premier lot d'initiateur avec un taux de dose constant.

3. Procédé pour la préparation de polymères selon la revendication 1 ou 2, **caractérisé en ce que** le composé de soufre présente à titre de deuxième groupe fonctionnel, un groupe acide, un groupe hydroxyle, un groupe silyle, un groupe allyle ou un groupe amine.

4. Procédé pour la préparation de polymères selon la revendication 3, **caractérisé en ce que**, via l'addition du composé de soufre, on obtient simultanément une élimination des atomes d'halogène aux extrémités de la chaîne polymère et une précipitation du catalyseur ATRP.

5. Procédé pour la préparation de polymères selon la revendication 3, **caractérisé en ce que** les extrémités de la chaîne sont fonctionnalisées par l'addition du composé de soufre, à concurrence d'au moins 75 %, de préférence à concurrence d'au moins 85 %.

6. Procédé pour la préparation de polymères selon la revendication 1, **caractérisé en ce qu'**il s'agit, en ce qui concerne le polymère, d'un polyacrylate, d'un polyméthacrylate ou bien d'un copolymère d'acrylates et de méthacrylates.

7. Procédé pour la préparation de polymères selon la revendication 6, **caractérisé en ce que** le polymère ou bien une ou plusieurs des séquences du polymère contient/contiennent en outre des acrylates et/ou des méthacrylates qui présentent un groupe fonctionnel supplémentaire.

8. Procédé pour la préparation de polymères selon la revendication 6, **caractérisé en ce que** le polymère ou bien une ou plusieurs des séquences du polymère contient/contiennent en outre des esters vinyliques, des éthers vinyliques, des fumarates, des maléates, des styrènes, des acrylonitriles ou d'autres monomères polymérisables par ATRP.

9. Procédé pour la préparation de polymères selon la revendication 1, **caractérisé en ce que** le polymère présente un poids moléculaire moyen en nombre entre 5.000 g/mol et 100.000 g/mol, de préférence entre 7.500 g/mol et 50.000 g/mol.

10. Procédé pour la préparation de polymères selon l'une quelconque des revendications 1 à 9, **caractérisé en ce qu'**il s'agit, en ce qui concerne le polymère, d'un copolymère séquencé, de préférence d'un copolymère séquencé de composition ABA, ACBCA ou CABAC.

11. Procédé pour la préparation de copolymères séquencés de composition ABA selon la revendication 10, **caractérisé en ce qu'**il s'agit, en ce qui concerne la séquence A, d'un copolymère possédant une distribution monomodale du poids moléculaire, en ce qui concerne la séquence B, d'un copolymère possédant une distribution monomodale du poids moléculaire avec un indice de polydispersité supérieur à 1,8 les monomères pouvant représenter des (méth)acrylates ou leurs mélanges.

12. Procédé pour la préparation de copolymères séquencés de composition ACBCA ou CABAC selon la revendication 10, **caractérisé en ce qu'**il s'agit, en ce qui concerne les séquences A et C, respectivement d'une séquence de copolymère possédant une distribution monomodale du poids moléculaire, les monomères pouvant être constitués par des (méth)acrylates ou par leurs mélanges, et aucun monomère possédant des groupes fonctionnels supplémentaires n'étant mis en oeuvre dans la séquence C.

13. Procédé pour la préparation de polymères selon l'une quelconque des revendications 10 à 11, **caractérisé en ce qu'**on ajoute l'initiateur en deux lots, le premier lot d'initiateur représentant de 10 % à 60 % en poids de préférence de 20 % à 40 % en poids de la quantité d'initiateur totale et étant ajouté en discontinu au début de la polymérisation, et **en ce qu'**on ajoute de manière dosée le deuxième lot d'initiateur au système directement après l'addition du premier lot d'initiateur un taux de dose constant.

14. Procédé pour la préparation de copolymères séquencés selon la revendication 13, **caractérisé en ce qu'**on ajoute de manière dosée le deuxième lot d'initiateur pendant un laps de temps d'au moins 30 minutes, de préférence d'au moins 60 minutes, et on met fin au dosage au moins 60 minutes, de préférence au moins 90 minutes avant addition du mélange de monomères A, respectivement C, à la solution de polymérisation.

15. Copolymère triséquencé ABA **caractérisé en ce que** les extrémités de la chaîne présentent à concurrence d'au moins 75 %, de préférence à concurrence d'au moins 85 %, un groupe fonctionnel qui ne représente pas un atome d'halogène, et **en ce que** l'indice de polydispersité du copolymère triséquencé ABA est supérieur à 1,8, mais inférieur à l'indice de polydispersité de la séquence B, contenant la séquence A avec une distribution monomodale du poids moléculaire, ainsi que la séquence B avec une large distribution monomodale du poids moléculaire dont l'indice de polydispersité est supérieur à 1,8, les monomères étant choisis parmi des (méth)acrylates ou leurs mélanges, que l'on peut obtenir via un procédé selon la revendication 11.

16. Copolymère pentaséquencé ACBCA ou CABAC **caractérisé en ce que** les extrémités de la chaîne présentent à concurrence d'au moins 75 %, de préférence à concurrence d'au moins 85 %, un groupe fonctionnel qui ne représente pas un atome d'halogène, et **en ce que** l'indice de polydispersité du copolymère pentaséquencé est supérieur à 1,8, mais inférieur à l'indice de polydispersité de la séquence B, contenant les séquences A et C, à propos desquelles il s'agit de copolymères possédant une distribution monomodale du poids moléculaire, ainsi que la séquence B avec une large distribution monomodale du poids moléculaire dont l'indice de polydispersité est supérieur à 1,8, les monomères étant choisis parmi des (méth)acrylates ou leurs mélanges, que l'on peut obtenir via un procédé selon la revendication 12.

17. Utilisation d'un polymère selon la revendication 15 ou 16, pour la fabrication d'adhésifs thermofusibles, de colles liquides, d'auto-adhésifs, de matières d'étanchéité élastiques, d'agents d'enduction ou de précurseurs de mousses.

18. Utilisation d'un polymère selon la revendication 15 ou 16, pour la fabrication de matières thermosoudables.

19. Utilisation d'un polymère selon la revendication 15 ou 16, dans des compositions réticulables, le copolymère séquencé présentant des groupes fonctionnels réactifs.
